# EUROPEAN PATENT APPLICATION

(11) **EP 4 686 066 A1**
(43) Date of publication of application: **28.01.2026**
(21) Application number: 25190787.9
(22) Date of filing: 21.07.2025
(51) Int. Cl.: H02M 1/32, H02M 1/36, H02M 7/49, H02M 1/00

(54) **POWER CELL FOR CASCADED CONVERTER AND CASCADED CONVERTER**

(30) Priority: 24.07.2024 CN 202410999218
(71) Applicant: ABB Beijing Drive Systems Co., Ltd., Chaoyang District, Beijing 100015 (CN)
(72) Inventor: WANG, Bo, Beijing 100025 (CN); PEI, GuangMing, Beijing 101121 (CN); LI, Min, Beijing 100083 (CN); WAN, Chen, Beijing 101100 (CN)
(74) Representative: Zimmermann & Partner Patentanwälte mbB

(57) **Abstract**

The present disclosure relates to a power cell for a cascaded converter, and a cascaded converter comprising the power cell. The power cell comprises a cell controller, a rectifier circuit, an inverter circuit, a DC-link capacitor, and a bypass control device, the bypass control device comprises: a bypass switch, disposed between the two output terminals of the inverter circuit; a switch driver, comprising a power supply input, a control input, and a driving output; and a power supply circuit, configured to supply power to the power supply input of the switch driver, wherein the switch driver is configured to receive a handshake signal from the cell controller of the power cell, and to drive the bypass switch to close when at least one of the following conditions is fulfilled: the handshake signal from the cell controller is lost, and a control signal from the cell controller is received by the control input.

## Description

### TECHNICAL FIELD

The present disclosure relates to the technical field of converter control, and more specifically, to a power cell for a cascaded converter, and a cascaded converter comprising the power cell.

### BACKGROUND

The cascaded (frequency) converter, as a core component in medium-voltage drive systems, is widely used in high-power equipment such as fans, water pumps, and compressors. The topology of a cascaded converter employs a plurality of cascaded modules (also referred to as "power cells") connected in series to achieve high voltage and multi-level output. However, this series-connected structure exhibits a significant drawback: if any single power cell fails, the entire converter system must cease operation, even if the remaining power cells are fully functional. This issue severely compromises the operational continuity and reliability of the converter.

To address this issue, cell bypass technology is usually adopted to bypass a single failed power cell, thereby enabling the converter to continue operating with the remaining functional power cells even if the single power cell fails. Although conventional cell bypass technology can partially resolve faults in a single power cell, it relies on complex hardware configurations and control strategies, and if a fault occurs at specific locations in the cell, the bypass technology may be ineffective in isolating the faulty cell.

### SUMMARY OF THE INVENTION

The present disclosure aims to resolve the problem of the entire converter system shutdown caused by a single power cell failure in a cascaded converter, especially aiming at the fault scenarios where existing cell bypass technology is inapplicable, such as cell controller damage, cell power supply failure, or short-circuit of the motor stator due to system faults, and thus an improved power cell for the converter is proposed. The power cell comprises a bypass control device to implement cell bypassing under various fault conditions, thereby ensuring uninterrupted and stable operation of the converter.

A first aspect of the present disclosure provides a power cell for a cascaded converter, comprising a cell controller, a rectifier circuit, an inverter circuit, a DC-link capacitor, and a bypass control device;
the DC-link capacitor being connected across positive and negative DC links between the output side of the rectifier circuit and the input side of the inverter circuit; the switching states of individual bridge arms in the inverter circuit being controlled by the cell controller;
the input side of the rectifier circuit being connected to an external power source; the output side of the inverter circuit comprising two output terminals, which serve as output pins of the power cell and are respectively connected in series with the output pins of other power cells in the converter to form a cascaded architecture of the converter;
the bypass control device being configured to bypass the power cell when a fault occurs in the power cell, wherein the bypass control device comprises:
   a bypass switch, disposed between the two output terminals of the inverter circuit;
   a switch driver, comprising a power supply input, a control input, and a driving output, said control input being connected to the cell controller of the power cell, said driving output being connected to the bypass switch to drive the bypass switch to open or close; and
   a power supply circuit, configured to supply power to the power supply input of the switch driver,
   wherein the switch driver is configured to receive a handshake signal from the cell controller of the power cell, and to drive the bypass switch to close when at least one of the following conditions is fulfilled:
      - the handshake signal from the cell controller is lost, and
      - a control signal from the cell controller is received by said control input.

By introducing a handshake signal between the cell controller and the relay drive circuit, the fault tolerance of the system to the damage of the cell controller is enhanced. When the cell controller fails, the relay drive circuit can automatically identify the fault and trigger the relay to close, thereby bypassing the faulty cell and ensuring uninterrupted operation of the converter system.

According to an optional embodiment, the bypass switch is designed as a latching relay, the initial state of which is set to a closed state. The problem of power failure is solved by adopting the latching relay. During each power-off of the converter, all cells automatically enter a bypassed state, and when the converter is powered on again, even if the cell fails to be powered on, the system can directly enter a cell bypass mode of operation, so that potential damage is prevented. This design simplifies the fault handling process and reduces the downtime of the system.

According to an optional embodiment, the power supply circuit is configured to receive DC power from both ends of the DC-link capacitor or AC power from the external power source, and convert the received DC or AC power into DC power to be supplied to the switch driver.

According to an optional embodiment, wherein the cell controller is configured to, under a normal working state, monitor operation conditions in the power cell in real time, and to periodically send the handshake signal to the switch driver.

According to an optional embodiment, the cell controller is further configured to, directly close the bypass switch upon detection of a fault in the power cell, or to send a corresponding fault report signal to a central controller of the converter.

A second aspect of the present disclosure also provides a cascaded converter, comprising a central controller and a cascaded architecture consisting of a plurality of power cells connected in series, wherein each of the plurality of power cells is designed as the power cell mentioned above.

According to an optional embodiment, the central controller is configured to receive feedback signals from the cell controllers of respective power cells in the converter, and to evaluate whether a systemic fault occurs in the converter based on the feedback signals provided by all power cells.

According to an optional embodiment, the central controller is further configured to, upon receiving a fault report signal from at least one power cell of the plurality of power cells, send a first control command to the cell controller of the at least one power cell to bypass the at least one power cell when it is determined that no systemic fault occurs in the converter.

According to an optional embodiment, the central controller is further configured to, when at least one power cell of the plurality of power cells is bypassed, initiate a neutral point shifting compensation procedure to compensate for the output imbalance of the converter caused by the bypassing of the at least one power cell.

According to an optional embodiment, the central controller is further configured to, in each power-off procedure of the converter, set the bypass switches in all power cells to a closed state.

According to an optional embodiment, the central controller is further configured to, in each power-off procedure of the converter, collect an output voltage and an output current of the converter and calculate a load electromotive force based on the collected results, and to set the bypass switches in all power cells to a closed state when the calculated load electromotive force is zero.

According to an optional embodiment, the central controller is further configured to, in each power-on procedure of the converter, send a second control command to the cell controllers of all power cells to open the respective bypass switches via the cell controllers of the respective power cells.

According to an optional embodiment, the central controller is further configured to:
- when the bypass switches in all power cells of the plurality of power cells are successfully opened, initiate a normal power-on procedure of the converter; and
- when the bypass switch in at least one of the plurality of power cells is not successfully opened, initiate a neutral point shifting compensation procedure of the converter.

The bypass control strategy of the present disclosure allows the central controller to flexibly decide whether to bypass the faulty cell or directly shut down the entire converter, effectively avoiding the risk of short-circuit for the motor stator. In particular, after controlling the relay to close, the cell controller will confirm the closed state of the relay to ensure safe initiation of Neutral Point Shifting (abbreviated as "NPS") modulation operation, preventing damage to the load caused by false action.

Compared with traditional power cell bypass control strategies, the bypass control device adopted in the power cell according to the present disclosure has a simple hardware configuration and low cost, which not only saves internal space of the power cell but also reduces the overall cost of the circuit . Meanwhile, the device exhibits high compatibility, making it applicable to various types of power cell faults, and thus can integrally improve the response capability and the operation stability of the cascade converter in the case of faults.

### BRIEF DESCRIPTION OF THE DRAWINGS

Other features and advantages of the method of the present disclosure will be clarified or elaborated through the accompanying drawings incorporated herein and the subsequent specific embodiments, which are used to elucidate certain principles of the present disclosure in conjunction with the drawings.
FIG. 1 illustrates an internal structure of a conventional power cell constituting a cascaded converter.
FIG. 2 illustrates an internal structure of a power cell integrated with a fundamental bypass control device.
FIG. 3 illustrates a topology diagram of a power cell in a cascaded converter according to an exemplary embodiment of the present disclosure.
FIG. 4 illustrates the flowchart of an operation method for a cascaded converter according to an exemplary embodiment of the present disclosure.

### DETAILED DESCRIPTION OF EMBODIMENTS

The power cell for a cascaded converter according to the present disclosure will be described below with reference to the drawings and through embodiments. In the following description, numerous specific details are set forth to enable those skilled in the art to gain a more comprehensive understanding of the present disclosure. However, it will be apparent to those skilled in the art that the implementation of the present disclosure may omit some of these specific details. Conversely, the present disclosure may be implemented using any combination of the following features and elements, regardless of whether they involve different embodiments. Therefore, the following aspects, features, embodiments, and advantages are for illustrative purposes only and shall not be regarded as elements or limitations of the claims.

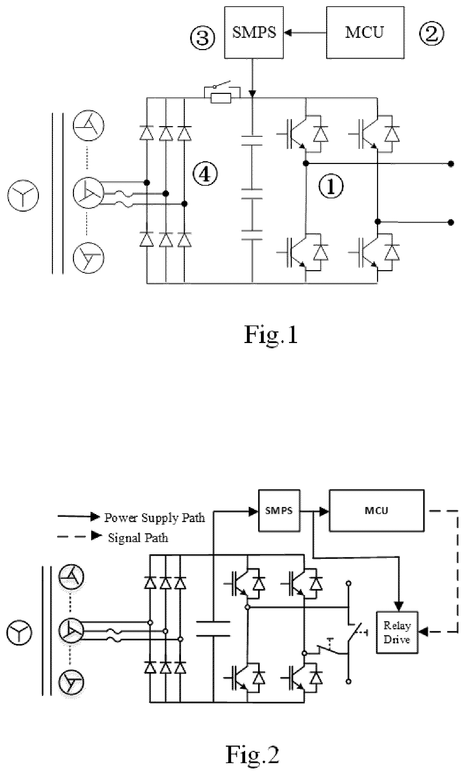

FIG. 1 illustrates an internal structure of a conventional power cell constituting a cascaded converter. This power cell is the fundamental cell constituting the entire cascaded converter. The internal structure of this power cell will be described in detail below with reference to FIG. 1.

As shown in FIG. 1, the power cell in this cascaded converter mainly consists of an internal power source, a microcontroller unit (MCU), a rectifier circuit, a DC-link capacitor, and an inverter circuit. Among them, the internal power source is responsible for providing the required DC power to the power cell, and it may be implemented, for example, as a Switch Mode Power Supply (SMPS). This switch mode power supply usually comprises a conversion circuit composed of MOSFETs, used to convert input AC power into DC power, and can also provide voltage stabilization and current stabilization functions.

The microcontroller unit (MCU) is the cell controller inside the power cell and is responsible for control operations inside the power cell. For example, the MCU may receive instructions from the central controller of the converter and control the switching states of various bridge arms in the inverter circuit based on these instructions to achieve the required output voltage and frequency.

The rectifier circuit may be implemented, for example, as a rectifier bridge composed of three diode half-bridges. It is responsible for converting the input AC power into DC power to supply DC power to the subsequent DC link. The DC-link capacitor may be used to smooth the voltage of the DC link, thereby ensuring the stability of the output of the downstream inverter circuit. The inverter circuit shown in FIG. 1 is composed of Insulated Gate Bipolar Transistors (IGBTs). It is responsible for converting the DC power on the DC link into AC power, and adjusting the amplitude and frequency of the output voltage as needed to control the operations of the load (usually a motor) connected to the converter.

The input side of the power cell may be directly connected to an external power source or to a phase-shifting transformer connected to the utility grid. Its purpose is to provide stable three-phase AC power to the power cells of the converter. In addition to the main components mentioned above, the power cell may also comprise necessary control and protection circuits to ensure the safe and stable operation of the cell under various operation conditions. For example, on the input side of the power cell, for example, on the primary side of the rectifier circuit, a fuse may be provided. When the input current exceeds the rated value, the fuse will blow to protect the downstream components of the power cell from damage.

Inside the power cell shown in FIG. 1, the following four types of faults may occur:
①. Inverter circuit fault: Referring to faults of the Insulated Gate Bipolar Transistors (IGBTs) in the inverter circuit, specifically comprising IGBT open-circuit or short-circuit, IGBT gate drive fault, IGBT overtemperature fault, and other faults related to IGBTs;
②. Cell controller fault: Referring to faults related to the cell controller (MCU) inside the power cell, specifically comprising cell controller damage, communication failure between the cell controller and the central controller, etc.;
③. Internal power source fault: Referring to faults of the Switch Mode Power Supply (SMPS) inside the power cell, specifically comprising damage to MOSFETs insides the SMPS, damage to the high-frequency transformer, etc.;
④. DC link fault: Referring to faults in the DC link, specifically comprising overvoltage on the DC link caused by control interruption and grid failure, undervoltage caused by short-circuit of the rectifier bridge arm or grid fluctuation, fuse blowing at the input side or disconnection of the rectifier, etc.

The locations of these four types of faults are marked as ①, ②, ③, and ④ in FIG. 1 respectively, covering issues ranging from semiconductor device damage to anomalies related to cell control and power supply. Corresponding bypass control strategies have been designed for these fault types to ensure system reliability and safety.

The most fundamental bypass control strategy employs a monostable relay powered by the SMPS inside the power cell as the actuator, wherein the cell controller is responsible for deciding whether to trigger the relay to close. FIG. 2 illustrates an internal structure of a power cell integrated with a basic bypass control device.

The configuration structure in FIG. 2 is only applicable to specific types of faults, namely, inverter faults (for example, open/short-circuit faults in category ①) and cell controller faults (limited to communication loss faults between the cell controller and the central controller in category ②) as shown in FIG. 1.

If the cell controller suffers sudden damage (corresponding to specific faults in category ②), the relay drive circuit will lose control, so this strategy is not applicable to such faults. For internal power source faults (category ③) and DC link faults (category ④), such as damage to the MOSFETs inside the SMPS, damage to the high-frequency transformer, overvoltage/undervoltage in the DC link, fuse blowing at the input side or disconnection of the rectifier, the relay will fail to operate normally due to the drive circuit losing power in these situations.

To cope with internal power source faults, a solution has been proposed that utilizes a separate SMPS (Switch Mode Power Supply) to supply the relay drive voltage using AC voltage at the input side, thereby reducing reliance on the SMPS. However, even with a separate SMPS, it still has a risk that if the SMPS fails, the relay may also fail to function. Furthermore, this configuration remains unable to handle scenarios where the cell controller itself malfunctions, since this strategy requires the cell controller to control the closure of the relay.

Additionally, if a systemic fault occurs in the converter, such as overvoltage/undervoltage in the input grid, all power cells will be bypassed, which will cause the risk of stator short-circuit of the motor during operation. If faults such as input side fuse blowing or rectifier disconnection in category ④ occur when the converter is turned off, i.e. the power cell fails to power on, this bypass control strategy cannot successfully bypass the disabled power cell(s) because all circuits in the power cell have no power supply.

To solve the problem that the above bypass control strategy cannot be applied to all fault categories in the power cell, a new cell bypass hardware configuration has been proposed, in which the relay is directly controlled by the central processor. However, this hardware configuration requires the use of HVDC (High Voltage Direct Current) relays to isolate high voltage of the system. For example, in a 10kV converter system, HVDC relays are required to isolate the 10kV voltage. The introduction of HVDC relays significantly increases the circuit cost. To this end, the inventor of the present application proposes a bypass control device and a method based on a latching relay, which can ensure applicability to all power cell fault categories without using HVDC relays.

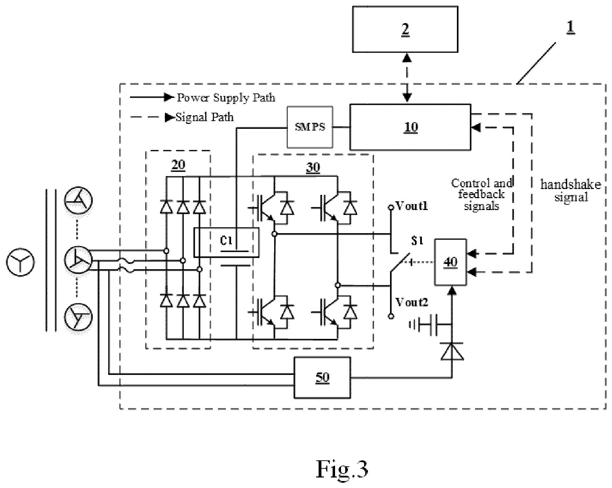

FIG. 3 shows a topology diagram of a power cell in a cascaded converter according to an exemplary embodiment of the present disclosure. The power cell here comprises several main parts, namely a cell controller 10, a rectifier circuit 20, an inverter circuit 30, and a DC-link capacitor C1. The power cell has its own power supply module, shown in FIG. 3 as SMPS, which particularly supplies power to the cell controller 10. The DC-link capacitor C1 is located between the output side of the rectifier circuit 20 and the input side of the inverter circuit 30, and connected across the positive and negative DC links. The switching states of the bridge arms of the inverter circuit 30 are controlled by the cell controller 10. The input side of the rectifier circuit 20 is connected to an external power source.

The output side of the inverter circuit 30 comprises two output terminals, which serve as output pins Vout1 and Vout2 of the power cell and are respectively connected in series with corresponding output pins of other power cells, so as to form a cascaded architecture of the converter. That is to say, this cascaded converter is constructed by a plurality of power cells containing the above internal structure being connected in series. To prevent faults within a single power cell from affecting the operation of the entire converter, the present application proposes utilizing a new bypass control device to bypass the failed power cell, thereby ensuring the uninterrupted operation of the entire converter system.

As shown in FIG. 3, the power cell comprises a bypass control device, the core components of which comprise a bypass switch S1, a switch driver 40, and a power supply circuit 50. The bypass switch S1 is disposed between the two output terminals Vout1 and Vout2 of the inverter circuit 30, which allows a single power cell to be short-circuited when a transmission fault is detected inside the cell. The switch driver 40 is a core component that drives the bypass switch S1 to perform closing and opening operations, and comprises a power supply input, a control input, and a driving output. The control input may receive a control signal from the cell controller 10 inside the power cell, and the driving output is connected to the bypass switch S1 to drive it to close or open.

The power supply circuit 50 is provided between the external power source (which may be, for example, a three-phase AC power source or a phase-shifting transformer connected to the utility grid) or the DC-link capacitor C1 and the power supply input of the switch driver 40, ensuring that the switch driver 40 is able to derive power from the external power source or the DC-link capacitor C1.

The configuration of the switch driver 40 allows it to periodically receive a handshake signal from the cell controller 10. When this handshake signal is lost or a specific control signal is received at the control input, the bypass switch S1 will be driven to closed. A special feature of this embodiment is that a handshake signal is added between the cell controller and the switch driver. If the handshake signal is lost, it indicates that the cell controller is damaged, at which time the switch driver 40 automatically closes the relay. This design not only improves the responsiveness to faults of the cell controller 10, but also enhances the fault tolerance of the system to faults of the inverter circuit 30. In particular, this mechanism ensures that when the cell controller 10 operates normally, the handshake signals are continuously received by the switch driver 40, at which time the bypass switch may perform switching actions based on control commands normally sent by the cell controller 10. When the cell controller 10 fails to operate normally, which is manifested by a loss of the handshake signals, the switch driver 40 drives the bypass switch S1 to close automatically, thereby ensuring that the bypass action is performed effectively even when the cell controller 10 fails, thereby maintaining stable operation of the converter.

To reduce reliance on the power supply circuit and the cell controller, the bypass switch S1 may be designed as a latching relay, such as a magnetic latching relay, which requires only a large capacitor to store energy and does not require a continuous power supply once the relay is activated. The initial state of the magnetic latching relay may be set to closed. This design means that when the converter is powered on, the two output pins Vout1 and Vout2 of the power cell are directly shorted by the bypass switch S1. At this time, if the cell controller 10 operates normally, a normal control signal will be sent to the switch driver 40 to open the bypass switch S1, thereby ensuring the proper connection of the power cell. If the cell controller 10 fails, the initial closed state of the magnetic latching relay still ensures that the faulty cell is in the bypassed state.

As an example, the power supply circuit 50 here may be a conventional Switch Mode Power Supply ("SMPS"). The SMPS is responsible for converting three-phase AC power from the external power source into DC power to supply to the switch driver 40. This conversion not only improves power utilization, but also provides a stable DC power supply for the switch driver 40, avoiding reliance on the internal power source of the power cell, and ensuring that the bypass switch S1 can respond quickly and accurately to various fault signals.

There are two connection ways for the inputs of the power supply circuit 50: one is directly connected to the input side of the converter (as shown in FIG. 3) to receive AC input current, in which case the power supply circuit 50 may be configured as a capacitive voltage divider circuit; the other is connected to the DC-link capacitor C1 inside the converter to receive DC input current, in which case the power supply circuit 50 may be configured as a resistive voltage divider circuit. The use of the capacitive or resistive voltage divider circuit simplifies the circuit structure and has higher reliability than SMPS, which can further reduce the potential risks associated with SMPS.

The power cell of the present disclosure comprises, inter alia, a bypass control device having the circuit arrangement described above, as shown in FIG. 3. The cell controller 10 in the power cell may monitor the operation conditions of respective modules in the power cell 1 in real time under normal working state, and periodically send a handshake signal to the switch driver 40 in the bypass control device. When a fault is detected in the power cell 1, the power cell may either directly close the bypass switch or send a corresponding fault report signal to the central controller of the converter.

Another exemplary embodiment of the present disclosure also relates to a cascaded converter. The converter comprises a central controller and a cascaded architecture of a plurality of power cells connected in series. The central controller may receive feedback signals from the cell controllers of the individual power cells in the converter and evaluate whether the converter has a systemic fault based on the feedback signals provided by all power cells.

When the central controller determines that it is not a systemic fault, it may issue a bypass permission command to the cell controller. After receiving this bypass permission command, the cell controller of the corresponding power cell may perform a control action to close the relay. The cell controller may then confirm whether the relay has been successfully closed. If it is confirmed that the relay is closed successfully, the cell controller sends a feedback signal to the central controller, so that the central controller can initiate a Neutral Point Shifting (NPS) compensation procedure to compensate for the output imbalance of the converter caused by the bypassing of at least one power cell 1. This control method avoids the risk of short-circuiting the motor stator when a systemic fault occurs.

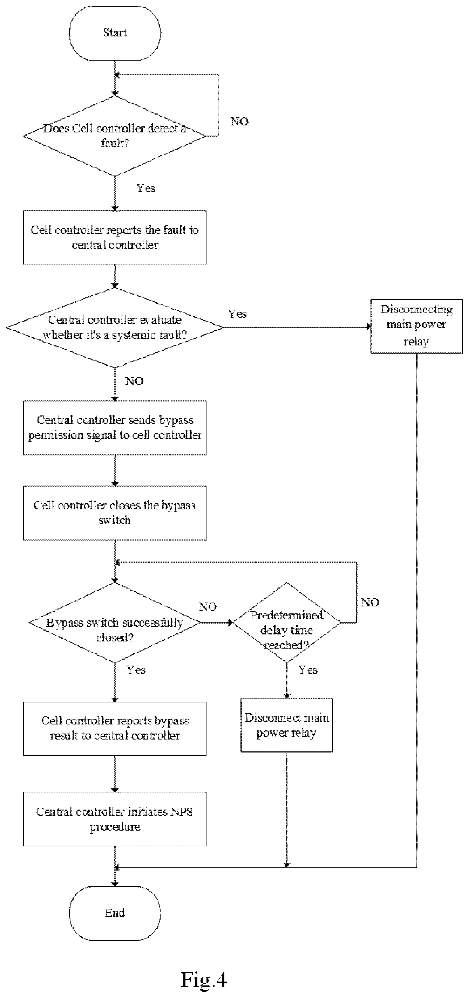

FIG. 4 shows a flowchart of the method for operating a cascaded converter according to an exemplary embodiment of the present disclosure. Below, the method for operating the converter is described below in connection with FIG. 4.

First, the cell controller in each power cell of the converter identifies whether a fault exists in each cell. If a fault is detected, the corresponding cell controller will immediately report to the central controller. The central controller then comprehensively evaluates whether a systemic fault has occurred in the converter based on the signals fed back from all the cell controllers. If the evaluation indicates that a systemic fault has occurred, the central controller may disconnect a main relay of the power supply to protect the entire system from further damage. If it is determined not to be a systemic fault, the central controller may send a bypass permission signal to the cell controller reporting the fault to authorize it to perform a bypass operation of the cell.

After receiving the bypass permission signal, the corresponding cell controller may control the bypass switch to closed, so that the main current of the converter is directly circulated to the normal power cells by bypassing the fault parts, thereby maintaining uninterrupted operation of the system. After the bypass switch is successfully closed, the cell controller may report the results of the bypass operation to the central controller. At this point, to compensate for output imbalance of the converter caused by bypassing the power cell, the central controller may initiate a Neutral Point Shifting (NPS) procedure to further optimize system performance. After completing all the above steps, the operation process ends.

If the cell controller reports that the bypass switch is not properly closed, after a predetermined delay, the central controller may further disconnect the main relay of the external input power supply to ensure overall safety of the system. Through the above operation flow, the converter can quickly respond to the detected cell faults, and the stability and the safety of the overall operation of the system are maintained through bypass operations.

In addition, considering potential scenarios where some power cells may fail to start up normally during the power-on procedure of the converter, the present disclosure further proposes a novel control logic to circumvent such faults. Specifically, during each power-off procedure of the converter system, the central controller of the converter may sample the output voltage and current of the converter to calculate the electromotive force (EMF) of the load (e.g., a motor). When the electromotive force of the load drops to zero, the bypass switches of all power cells are set to a closed state.

When the converter is powered on again and reinitiated, the central controller firstly checks the state of each power cell. This process may be implemented by issuing an instruction to all cell controllers to open the bypass switches. If the corresponding cell controller is normal, it may switch the corresponding relay into an open state. When it is confirmed that the bypass switches in all the power cells are normally opened, the central controller may initiate a normal power-on procedure of the converter.

If a certain cell controller fails to communicate with the central controller (as if the bypass switch inside the corresponding power cell was not successfully opened), the central controller initiates the neutral point shifting compensation procedure. At this time, since the power cell with the fault has been bypassed, even if the power cell cannot be normally powered on, the drive system can still initiate the neutral point shifting compensation procedure without causing the stator of the motor to be short-circuited.

Compared with traditional power cell bypass control strategies, the bypass control device adopted in the power cell according to the present disclosure has a simple hardware configuration and low cost, which not only saves internal space of the power cell but also reduces the overall cost of the circuit . Meanwhile, the device exhibits high compatibility, making it applicable to various types of power cell faults, and thus can integrally improve the response capability and the operation stability of the cascade converter in the case of faults.

Firstly, the device enhances the fault tolerance of the system to the damage of the cell controller by introducing a handshake signal between the cell controller and the relay drive circuit. When the cell controller fails, the relay drive circuit can automatically identify the fault and trigger the relay to close, thereby bypassing the faulty cell and ensuring uninterrupted operation of the converter system. Secondly, the bypass control device of the present disclosure solves the problem of power failure by adopting a latching relay. During each power-off of the converter, all cells automatically enter a bypassed state, and when the converter is powered on again, even if the power-on of the cells fail, the system can also maintain a safe state, so that potential damage is prevented. This design simplifies the fault handling process and reduces the downtime of the system. Finally, the bypass control strategy of the present disclosure allows the central controller to flexibly decide whether to bypass the faulty cell or directly shut down the entire converter, thereby effectively avoiding the risk of short-circuit of the motor stator. In particular, after controlling the relay to close, the cell controller confirms its closed state to ensure that the converter can safely initiate the modulation operation for the neutral point shifting compensation procedure, avoiding damage to the load caused by false action.

It will be appreciated by those skilled in the art that the individual steps of the method according to the application are not limited to being carried out in the order listed above. In addition, in the present application, the terms "comprising" and "comprises" mean that, in addition to the steps directly and explicitly stated in the specification and claims, the technical solution of the present application does not exclude the presence of other steps which are not directly or explicitly stated.

Although the present disclosure has been described in connection with the preferred embodiments, it is not limited thereto.

## Claims

1. A power cell (1) for a cascaded converter, comprising a cell controller (10), a rectifier circuit (20), an inverter circuit (30), a DC-link capacitor (C1), and a bypass control device; the DC-link capacitor being connected across positive and negative DC links between the output side of the rectifier circuit (20) and the input side of the inverter circuit (30);
the switching states of individual bridge arms in the inverter circuit (30) being controlled by the cell controller (10);
the input side of the rectifier circuit (20) being connected to an external power source;
the output side of the inverter circuit (30) comprising two output terminals, which serve as output pins of the power cell (1) and are respectively connected in series with the output pins of other power cells (1) in the converter to form a cascaded architecture of the converter;
the bypass control device being configured to bypass the power cell (1) when a fault occurs in the power cell (1),
wherein the bypass control device comprises:
a bypass switch (S1), disposed between the two output terminals of the inverter circuit (30);
a switch driver (40), comprising a power supply input, a control input, and a driving output, said control input being connected to the cell controller (10) of the power cell (1), said driving output being connected to the bypass switch to drive the bypass switch to open or close; and
a power supply circuit (50), configured to supply power to the power supply input of the switch driver (40),
wherein the switch driver (40) is configured to receive a handshake signal from the cell controller (10) of the power cell (1), and to drive the bypass switch to close when at least one of the following conditions is fulfilled:
- the handshake signal from the cell controller (10) is lost, and
- a control signal from the cell controller (10) is received by said control input.

2. The power cell (1) according to claim 1, wherein the bypass switch is designed as a latching relay, the initial state of which is set to a closed state.

3. The power cell (1) according to claim 1 or 2, wherein the power supply circuit (50) is configured to receive DC power from both ends of the DC-link capacitor (C1) or AC power from the external power source, and convert the received DC or AC power into DC power to be supplied to the switch driver (40).

4. The power cell (1) according to claim 1, 2 or 3, wherein the cell controller (10) is configured to, under a normal working state, monitor operation conditions in the power cell (1) in real time, and to periodically send the handshake signal to the switch driver (40).

5. The power cell (1) according to any of the previous claims, wherein the cell controller (10) is configured to, directly close the bypass switch upon detection of a fault in the power cell (1), or to send a corresponding fault report signal to a central controller of the converter.

6. A cascaded converter, comprising a central controller and a cascaded architecture consisting of a plurality of power cells connected in series, wherein each of the plurality of power cells is designed as the power cell (1) according to any one of claims 1 to 5.

7. The cascaded converter according to claim 6, wherein the central controller is configured to receive feedback signals from the cell controllers of respective power cells in the converter, and to evaluate whether a systemic fault occurs in the converter based on the feedback signals provided by all power cells.

8. The cascaded converter according to claim 6 or 7, wherein the central controller is configured to, upon receiving a fault report signal from at least one power cell of the plurality of power cells, send a first control command to the cell controller of the at least one power cell to bypass the at least one power cell when it is determined that no systemic fault occurs in the converter.

9. The cascaded converter according to claim 6, 7 or 8, wherein the central controller is configured to, when at least one power cell of the plurality of power cells is bypassed, initiate a neutral point shifting compensation procedure to compensate for the output imbalance of the converter caused by the bypassing of the at least one power cell.

10. The cascaded converter according to any one of claims 6 to 9, wherein the central controller is configured to, in each power-off procedure of the converter, set the bypass switches in all power cells to a closed state.

11. The cascaded converter according to any one of claims 6 to 10, wherein the central controller is configured to, in each power-off procedure of the converter, collect an output voltage and an output current of the converter and calculate a load electromotive force based on the collected results, and to set the bypass switches in all power cells to a closed state when the calculated load electromotive force is zero.

12. The cascaded converter according to any one of claims 6 to 11, wherein the central controller is configured to, in each power-on procedure of the converter, send a second control command to the cell controllers of all power cells to open the respective bypass switches via the cell controllers of the respective power cells.

13. The cascaded converter according to any one of claim 6 to 12, wherein the central controller is configured to:
- when the bypass switches in all power cells of the plurality of power cells are successfully opened, initiate a normal power-on procedure of the converter; and
- when the bypass switch in at least one of the plurality of power cells is not successfully opened, initiate a neutral point shifting compensation procedure of the converter.
